# EUROPEAN PATENT APPLICATION

(11) **EP 4 790 388 A1**
(43) Date of publication of application: **12.08.2026**
(21) Application number: 24874337.9
(22) Date of filing: 29.07.2024
(51) Int. Cl.: G01N 21/59, C02F 1/00, G01N 21/15, G01N 21/94

(54) **DETERMINATION DEVICE AND DETERMINATION METHOD**

(30) Priority: 06.10.2023 JP 2023174174
(71) Applicant: Wota Corp., Tokyo, 103-0002 (JP)
(72) Inventor: KIM Kyungju, Tokyo 103-0002 (JP); YOSHIDA Yoichi, Tokyo 103-0002 (JP); MUKOHARA Hodaka, Tokyo 103-0002 (JP)
(74) Representative: Grünecker Patent- und Rechtsanwälte PartG mbB
(86) International application number: PCT/JP2024/027003
(87) International publication number: WO 2025/074722

(57) **Abstract**

A determination device includes a plurality of sensors of a same type configured to detect a predetermined physical quantity of a same measurement target, and a determination unit configured to determine a deterioration state of a deterioration determination target using a plurality of detection values detected by the plurality of sensors of the same type.

## Description

### TECHNICAL FIELD

The present invention relates to a determination device and a determination method for determining a deterioration state of a deterioration determination target.

### BACKGROUND

Conventionally, there has been known a detection method in which a light source and an optical sensor are located to face each other via a flow path and a turbidity of water flowing through the flow path is detected by detecting an amount of a light transmitted through the flow path using the optical sensor (for example, Patent Literature 1).

### Citation List

### Patent Literature

Patent Literature 1: JP 2006-61217

### DISCLOSURE OF THE INVENTION

### PROBLEMS TO BE SOLVED BY THE INVENTION

However, in the conventional detection method, there is a problem in that a detection accuracy of the light quantity by the optical sensor decreases when dirt adheres to the flow path or the optical sensor, or when the flow path or the optical sensor is scratched. In addition, since dirt and scratch are gradually accumulated through daily use, there is also a problem in that the detection of the light quantity by the optical sensor becomes even more difficult.

Such problems, that is, the decrease in detection accuracy of a sensor due to dirt, scratch, and the like is not limited to optical sensors, and also apply to various kinds of known sensors. In contrast, the inventors have found that a deterioration state of a deterioration determination target can be determined by using a plurality of sensors of the same type and using detection values detected by the respective sensors.

The present invention is made in consideration of the above-described problems, and its objective is to provide a determination device and a determination method capable of determining a deterioration state of a deterioration determination target.

### SOLUTIONS TO THE PROBLEMS

A determination device according to the present invention includes a plurality of sensors of a same type configured to detect a predetermined physical quantity of a same measurement target, and a determination unit configured to determine a deterioration state of a deterioration determination target using a plurality of detection values detected by the plurality of sensors of the same type.

In the determination device according to the present invention, the plurality of sensors of the same type preferably correspond to (1) and/or (2) below.
(1) using a plurality of sensors of a same type having different measurement ranges.
(2) using a plurality of sensors of a same type having a same measurement range by setting different distances or different resistance values.

In the determination device according to the present invention, the determination device further includes a calculation unit configured to calculate relative amounts of change in the plurality of detection values detected by the plurality of sensors of the same type, and the determination unit may be configured to detect a deterioration level of the deterioration determination target using the amounts of change calculated by the calculation unit.

In the determination device according to the present invention, the determination unit is preferably configured to detect a sign of abnormality and/or a sign of failure of the deterioration determination target when the amount of change in a predetermined time period is equal to or more than a predetermined threshold.

In the determination device according to the present invention, the determination unit may be configured to detect an abnormality and/or a failure of the deterioration determination target using the amount of change.

A determination method according to the present invention includes a detecting step of detecting a predetermined physical quantity of a same measurement target by a plurality of sensors of a same type, and a determining step of determining a deterioration state of a deterioration determination target using a plurality of detection values detected by the detecting step.

In the determination method according to the present invention, the measurement target is a flow path and a fluid flowing through the flow path, the detecting step includes a step of receiving lights emitted from a plurality of light sources toward the flow path by the plurality of optical sensors via the flow path, and the determining step includes a step of determining the deterioration state of the deterioration determination target using a plurality of light quantities detected by the detecting step.

### EFFECTS OF INVENTION

According to the determination device and the determination method of the present invention, the deterioration state of the deterioration determination target can be determined.

### BRIEF DESCRIPTION OF DRAWINGS

[FIG. 1] FIG. 1 is a block diagram illustrating a configuration of a determination device according to the embodiment.
[FIG. 2] FIG. 2 is a graph illustrating relative amounts of change in a plurality of detection values detected by a plurality of sensors.
[FIG. 3] FIG. 3 is a schematic diagram illustrating a configuration of an exemplary determination device according to the embodiment.
[FIG. 4] FIG. 4 is a block diagram illustrating a configuration of a control device in the exemplary determination device according to the embodiment.

### DETAILED DESCRIPTION

Hereinafter, a preferred embodiment for carrying out the present invention will be described by referring to the drawings. Note that, the following embodiment does not limit the present invention according to each of the claims, and all combinations of the characteristics described in the embodiment are not necessarily essential for means for solving the problems of the present invention. In addition, in the embodiment, the scale and dimensions of each component may be exaggerated, or some components may be omitted.

### [Overall Configuration of Determination Device]

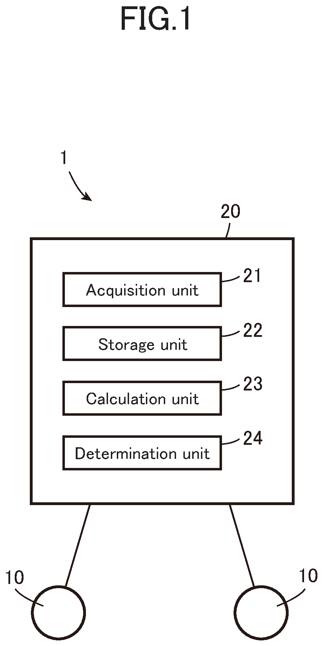

As illustrated in FIG. 1, a determination device 1 according to the embodiment includes a plurality of sensors 10 of the same type configured to detect a predetermined physical quantity of the same measurement target, and a control device 20 connected to the plurality of sensors 10.

In this specification, the "plurality of sensors of the same type" means (1) and/or (2) below.
(1) Using a plurality of sensors of the same type having different measurement ranges.
(2) Using a plurality of sensors of the same type having the same measurement range by setting different distances or different resistance values.

In this specification, the "predetermined physical quantity" varies corresponding to the sensor used as the sensor 10. For example, when an optical sensor is used as the sensor 10, a light quantity serves as the predetermined physical quantity, and when a temperature sensor, such as a thermocouple, is used as the sensor 10, temperature serves as the predetermined physical quantity.

As described above, the sensor 10 is configured to detect the predetermined physical quantity of the same measurement target. Various kinds of known sensors can be used as the sensor 10, and for example, an optical sensor, a temperature sensor such as a thermocouple, a pressure sensor, and the like may be used.

As illustrated in FIG. 1, the control device 20 includes an acquisition unit 21 configured to acquire detection value information detected by the sensors 10 from the respective sensors 10, a storage unit 22 configured to store threshold information, and a calculation unit 23 configured to calculate relative amounts of change in a plurality of detection values detected by the plurality of sensors 10 of the same type.

The storage unit 22 is configured to store each piece of the detection value information acquired by the acquisition unit 21. The storage unit 22 is also configured to store first threshold information and second threshold information as the threshold information. Here, the first threshold information is information on a reference value (sign determination threshold) used by a determination unit 24 described later to determine whether a deterioration determination target described later has a sign of abnormality and/or a sign of failure or not. The second threshold information is information on a reference value (failure determination threshold) used by the determination unit 24 to determine whether the deterioration determination target has an abnormality and/or a failure or not. The second threshold information (failure determination threshold) can be arbitrarily set, and the first threshold information (sign determination threshold) can be arbitrarily set within a threshold range that allows an earlier detection than the second threshold information (failure determination threshold).

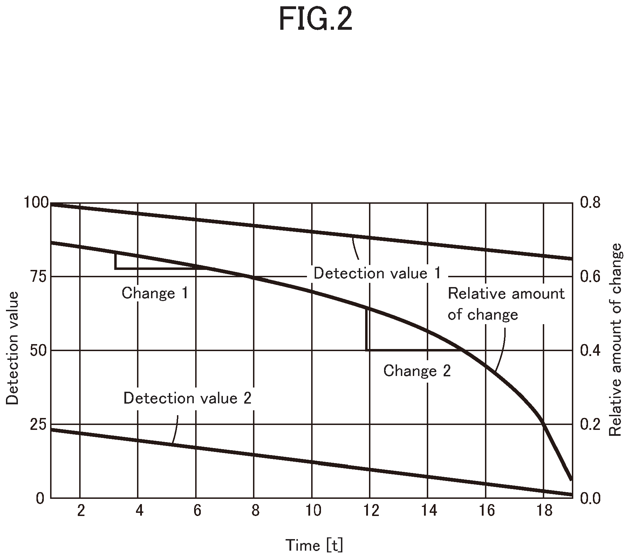

As illustrated in FIG. 2, the calculation unit 23 is configured to calculate relative amounts of change in the respective detection values (in the illustrated example, detection value 1 and detection value 2) detected by the sensors 10 based on the detection value information stored in the storage unit 22. Here, the "relative amount of change" includes, for example, amounts of change in a relative difference, a relative ratio, and a logarithmic ratio, an amount of change in a differential value, or an amount of change in an integral value, and an amount of change in a logarithmic ratio is particularly preferable.

As illustrated in FIG. 1, the control device 20 according to the embodiment further includes the determination unit 24 configured to determine a deterioration state of the deterioration determination target using the plurality of detection values detected by the plurality of sensors 10 of the same type.

In this specification, the "deterioration determination target" means at least one of the measurement target, the sensor 10 itself, and any portion other than the measurement target of an apparatus (for example, a water treatment apparatus) and the like including the measurement target. In this specification, the "deterioration" is a term that includes, for example, deterioration due to contamination, deterioration due to scratches or wear, and deterioration due to aging.

The determination unit 24 is configured to detect a deterioration level of the deterioration determination target using the relative amounts of change in the respective detection values calculated by the calculation unit 23. That is, the determination unit 24 determines the deterioration level of the deterioration determination target to be small when the relative amount of change in a predetermined time period in each detection value calculated by the calculation unit 23 is small (when a slope of the graph is small) like Change 1 illustrated in FIG. 2. On the other hand, the determination unit 24 determines the deterioration level of the deterioration determination target to be large when the relative amount of change in the predetermined time period in each detection value calculated by the calculation unit 23 is large (when a slope of the graph is large) like Change 2 illustrated in FIG. 2.

The determination unit 24 is configured to detect a sign of abnormality and/or a sign of failure of the deterioration determination target using the relative amounts of change in the respective detection values calculated by the calculation unit 23. Specifically, the determination unit 24 is configured to detect the sign of abnormality and/or the sign of failure of the deterioration determination target when the relative amounts of change in the predetermined time period in the respective detection values calculated by the calculation unit 23 are equal to or more than the sign determination threshold and less than the failure determination threshold based on the first threshold information and the second threshold information stored in the storage unit 22 and the relative amounts of change in the respective detection values calculated by the calculation unit 23.

Furthermore, the determination unit 24 is configured to detect an abnormality and/or a failure of the deterioration determination target using the relative amounts of change in the respective detection values calculated by the calculation unit 23. Specifically, the determination unit 24 is configured to detect the abnormality and/or failure of the deterioration determination target when the relative amounts of change in the predetermined time period in the respective detection values calculated by the calculation unit 23 is equal to or more than the failure determination threshold based on the second threshold information stored in the storage unit 22 and the relative amounts of change in the respective detection values calculated by the calculation unit 23.

The control device 20 may include a display unit configured to display the deterioration level and the like of the deterioration determination target detected by the determination unit 24 in addition to the acquisition unit 21, the storage unit 22, the calculation unit 23, and the determination unit 24 described above.

### [Example of Determination Device]

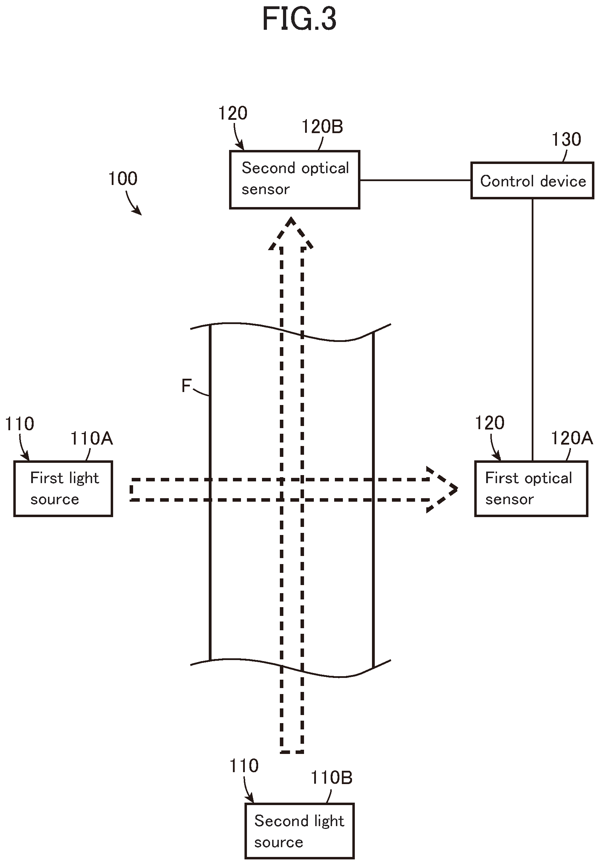

Next, as an example of the determination device 1 according to the embodiment, a configuration of a determination device 100 is described. As illustrated in FIG. 3, the determination device 100 includes a plurality of light sources 110 configured to emit light toward a flow path F, a plurality of optical sensors 120 configured to receive the light emitted from the plurality of light sources 110 via the flow path F, and a control device 130 electrically connected to the plurality of optical sensors 120.

In the explanation of the determination device 100, the measurement target is the flow path F and a fluid flowing through the flow path F, the deterioration determination target is the flow path F and the optical sensors 120, the predetermined physical quantity and the detection value are the light quantity (may be expressed as light intensity of or measurement value), and the sensor 10 is the optical sensor 120. In the explanation of the determination device 100, for the optical sensors 120, a plurality of the optical sensors 120 having the same measurement range are used with different distances as described later. Further, in the explanation of the determination device 100, the relative amount of change is an amount of change in a logarithmic ratio (log value) as described later.

As illustrated in FIG. 3, the light sources 110 include a first light source 110A and a second light source 110B. The first light source 110A and the second light source 110B include, for example, any light emitting element such as an LED. The light emitting element of the first light source 110A and the light emitting element of the second light source 110B may be same, or may be different.

As illustrated in FIG. 3, the optical sensors 120 include a first optical sensor 120A and a second optical sensor 120B. The first optical sensor 120A and the second optical sensor 120B include, for example, any light receiving element such as a photodiode, and have the same measurement range. The first optical sensor 120A is configured to receive the light emitted from the first light source 110A and transmitted through the flow path F. Similarly, the second optical sensor 120B is configured to receive the light emitted from the second light source 110B and transmitted through the flow path F. The light receiving element of the first optical sensor 120A and the light receiving element of the second optical sensor 120B may be same, or may be different.

The first light source 110A and the first optical sensor 120A, and the second light source 110B and the second optical sensor 120B are arranged such that an optical path length from the second light source 110B to the second optical sensor 120B becomes longer than an optical path length from the first light source 110A to the first optical sensor 120A.

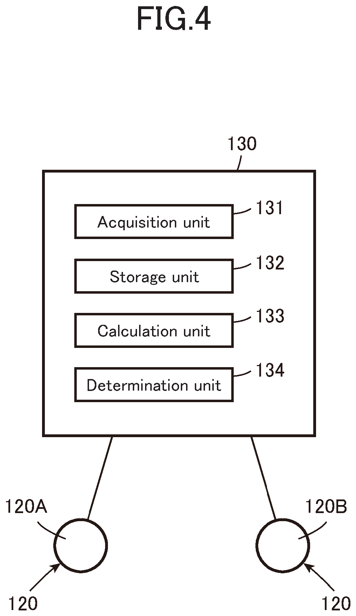

As illustrated in FIG. 4, the control device 130 includes an acquisition unit 131 configured to acquire light quantity information detected by the first optical sensor 120A and the second optical sensor 120B from the first optical sensor 120A and the second optical sensor 120B, a storage unit 132 configured to store threshold information, and a calculation unit 133 configured to calculate an amount of change in a logarithmic ratio between a light quantity detected by the first optical sensor 120A and a light quantity detected by the second optical sensor 120B.

The storage unit 132 is configured to store the light quantity information acquired by the acquisition unit 131. The storage unit 132 is configured to store the first threshold information and the second threshold information as the threshold information. The calculation unit 133 is configured to calculate the amount of change in the logarithmic ratio between the light quantity detected by the first optical sensor 120A and the light quantity detected by the second optical sensor 120B based on the light quantity information stored in the storage unit 132.

As illustrated in FIG. 4, the control device 130 further includes a determination unit 134 configured to determine the deterioration state of the flow path F using the light quantity detected by the first optical sensor 120A and the light quantity detected by the second optical sensor 120B. The determination unit 134 is configured to detect the deterioration level of the flow path F using the amount of change in the logarithmic ratio calculated by the calculation unit 133.

The determination unit 134 is configured to detect a sign of abnormality and/or failure of the flow path F using the amount of change in the logarithmic ratio calculated by the calculation unit 133. Specifically, the determination unit 134 is configured to detect the sign of the abnormality and/or failure (occurrence of scratch, dirt accumulation, and the like) of the flow path F and the sign of abnormality and/or failure and the like of the optical sensor 120 when the amount of change in the predetermined time period in the logarithmic ratio calculated by the calculation unit 133 is equal to or more than the sign determination threshold and less than the failure determination threshold based on the first threshold information and the second threshold information stored in the storage unit 132 and the amount of change in the logarithmic ratio calculated by the calculation unit 133.

Furthermore, the determination unit 134 is configured to detect the abnormality and/or failure of the flow path F using the amount of change in the logarithmic ratio calculated by the calculation unit 133. Specifically, the determination unit 134 is configured to detect the abnormality and/or failure (occurrence of scratch, dirt accumulation, and the like) of the flow path F and the abnormality and/or failure and the like of the optical sensor 120 when the amount of change in the predetermined time period in the logarithmic ratio calculated by the calculation unit 133 is equal to or more than the failure determination threshold based on the second threshold information stored in the storage unit 132 and the amount of change in the logarithmic ratio calculated by the calculation unit 133.

### [Determination Method]

Next, a determination method using the determination device 1 according to the embodiment is described.

### [Detecting Step]

First, in a detecting step, the predetermined physical quantity of the same measurement target is detected by the plurality of sensors 10 of the same type.

### [Acquiring Step, Storing Step, and Calculating Step]

Next, in an acquiring step, the acquisition unit 21 acquires the detection value information detected by the sensors 10 from the respective sensors 10. Then, in a storing step, the storage unit 22 stores each piece of the detection value information acquired by the acquisition unit 21. Then, in a calculating step, the calculation unit 23 calculates the relative amounts of change in the respective detection values detected by the sensors 10 based on the detection value information stored in the storage unit 22.

### [Determining Step]

Finally, in a determining step, the determination unit 24 determines the deterioration state of the deterioration determination target using the plurality of detection values detected in the detecting step. Specifically, the determination unit 24 detects the deterioration level, the sign of abnormality and/or the sign of failure, the occurrence of abnormality and/or failure of the deterioration determination target using the relative amounts of change in the respective detection values calculated by the calculation unit 23.

### [Advantages of Determination Device According to The Embodiment]

Thus, the determination device 1 according to the embodiment includes the plurality of sensors 10 of the same type configured to detect the predetermined physical quantity of the same measurement target, and the determination unit 24 configured to determine the deterioration state of the deterioration determination target using the plurality of detection values detected by the plurality of sensors 10 of the same type.

According to the determination device 1 having such a configuration, there is an advantage that it is possible to determine the deterioration state of the deterioration determination target with a simple configuration. Further, since it is only necessary to provide the plurality of sensors 10 of the same type, there is an advantage that it is possible to perform the introduction without excessively increasing the facility cost.

The determination device 1 according to the embodiment further includes the calculation unit 23 configured to calculate relative amounts of change in the plurality of detection values detected by the plurality of sensors 10 of the same type, and the determination unit 24 is configured to detect the deterioration level of the deterioration determination target using the amounts of change calculated by the calculation unit 23. According to the determination device 1 having such a configuration, there is an advantage that it is possible to accurately capture slight changes in an initial stage of deterioration that cannot be determined from detected measured values (absolute values), thereby improving the detection accuracy.

Furthermore, in the determination device 1 according to the embodiment, the determination unit 24 is configured to detect the sign of abnormality and/or sign of failure of the deterioration determination target when the amount of change in the predetermined time period is equal to or more than the predetermined threshold. According to the determination device 1 having such a configuration, it is possible to estimate the cause of the deterioration state in the deterioration determination target from the change trend of the relative amounts of change calculated by the calculation unit 23. For example, when the change trend of the relative amounts of change calculated by the calculation unit 23 deviates from a normal change trend, it is possible to detect the sign of abnormality and/or sign of failure in the deterioration determination target. Thus, according to the determination device 1 having the above-described configuration, there is an advantage that it is possible to detect not only the deterioration state of the deterioration determination target but also the sign of abnormality and/or sign of failure of the deterioration determination target, and this makes it possible to take countermeasures before an abnormality and/or a failure actually occurs, thereby providing high convenience.

In the determination device 1 according to the embodiment, the determination unit 24 is configured to detect the abnormality and/or failure of the deterioration determination target using the amount of change. According to the determination device 1 having such a configuration, as described above, it is possible to estimate the cause of the deterioration state in the deterioration determination target from the change trend of the relative amounts of change calculated by the calculation unit 23. That is, there is an advantage that it is possible to detect not only the deterioration state of the deterioration determination target but also the abnormality and/or failure of the deterioration determination target, thereby providing high convenience.

Furthermore, according to the determination device 1 according to the embodiment, there is an advantage that it is facilitated to determine the deterioration state and the deterioration level especially in a circulating water treatment apparatus and to predict the abnormality and/or failure early, thereby making it possible to avoid failures and achieve stable operation through appropriate and timely maintenance of the water treatment apparatus.

### [Modification]

The determination device according to the present invention is not limited to the above-described embodiment, and various modifications can be made within the scope of the technical idea of the present invention.

For example, in the description of the above-described embodiment, the determination unit 24 is configured to detect the deterioration level, the sign of abnormality and/or sign of failure, the abnormality and/or failure of the deterioration determination target using the amount of change calculated by the calculation unit 23, but it is not limited thereto, for example, the determination unit 24 may be configured to perform AI determination using a plurality of detection values detected by the plurality of sensors 10.

It is apparent from the description of the claims that the modifications as described above are included in the scope of the present invention.

### DESCRIPTION OF REFERENCE SIGNS

- 1: Determination device
- 10: Sensor
- 20: Control device
- 21: Acquisition unit
- 22: Storage unit
- 23: Calculation unit
- 24: Determination unit
- 100: Determination device
- 110: Light source
- 110A: First light source
- 110B: Second light source
- 120: Optical sensor
- 120A: First optical sensor
- 120B: Second optical sensor
- 130: Control device
- 131: Acquisition unit
- 132: Storage unit
- 133: Calculation unit
- 134: Determination unit
- F: Flow path

## Claims

1. A determination device comprising:
a plurality of sensors of a same type configured to detect a predetermined physical quantity of a same measurement target;
a calculation unit configured to calculate relative amounts of change in a plurality of detection values detected by the plurality of sensors of the same type; and
a determination unit configured to determine a deterioration state of a deterioration determination target using the relative amounts of change in a predetermined time period calculated by the calculation unit.

2. The determination device according to claim 1, wherein
the plurality of sensors of the same type correspond to (1) and/or (2) below:
(1) using a plurality of sensors of a same type having different measurement ranges; and/or
(2) using a plurality of sensors of a same type having a same measurement range by setting different distances or different resistance values.

3. The determination device according to claim 1 or 2, wherein
the relative amount of change refers to an amount of change in a relative difference, an amount of change in a relative ratio, an amount of change in a logarithmic ratio, an amount of change in a differential value, or an amount of change in an integral value, and
the determination unit is configured to detect a deterioration level of the deterioration determination target using the relative amount of change calculated by the calculation unit.

4. The determination device according to claim 1 or 2, wherein
the determination unit is configured to detect a sign of abnormality and/or a sign of failure of the deterioration determination target when the relative amount of change in the predetermined time period is equal to or more than a predetermined threshold.

5. The determination device according to claim 1 or 2, wherein
the determination unit is configured to detect an abnormality and/or a failure of the deterioration determination target using the relative amount of change.

6. A determination method comprising:
a detecting step of detecting a predetermined physical quantity of a same measurement target by a plurality of sensors of a same type;
a calculating step of calculating relative amounts of change in a plurality of detection values detected by the detecting step; and
a determining step of determining a deterioration state of a deterioration determination target using the relative amounts of change in a predetermined time period calculated by the calculating step.

7. The determination method according to claim 6, wherein
the measurement target is a flow path of a water treatment apparatus and a fluid flowing through the flow path,
the detecting step includes a step of receiving lights emitted from a plurality of light sources toward the flow path by the plurality of optical sensors via the flow path,
the calculating step includes a step of calculating relative amounts of change in a plurality of light quantities detected by the detecting step; and
the determining step includes a step of determining a deterioration state of the water treatment apparatus using the relative amounts of change calculated by the calculating step.
